# EUROPEAN PATENT APPLICATION

(11) **EP 3 611 637 A1**
(43) Date of publication of application: **19.02.2020**
(21) Application number: 19165145.4
(22) Date of filing: 26.03.2019
(51) Int. Cl.: G06F 17/27

(54) **RESPONSE INFERENCE METHOD AND APPARATUS**

(30) Priority: 14.08.2018 KR 20180094770
(71) Applicant: Samsung Electronics Co., Ltd., Suwon-si, Gyeonggi-do, 16677 (KR)
(72) Inventor: Jeon, Jehun, 16678 Gyeonggi-do (KR); Kim, Young-Seok, 16678 Gyeonggi-do (KR); Park, Jeong-hoon, 16678 Gyeonggi-do (KR); Choi, Junhwi, 16678 Gyeonggi-do (KR)
(74) Representative: Hylarides, Paul Jacques

(57) **Abstract**

Disclosed is a response inference method and apparatus. The response inference apparatus obtains an input, generates a latent variable vector in a latent variable region space partitioned into regions corresponding to a plurality of responses by encoding the input, and generates an output response corresponding to a region, from among the regions, of the latent variable vector by decoding the latent variable vector.

## Description

### BACKGROUND

### 1. Field

The following description relates to response inference technology.

### 2. Description of Related Art

Conversation models include a goal-oriented conversation model and an ordinary conversation model. The goal-oriented conversation model generates a single response to an utterance having a definite goal. The ordinary conversation model generates various responses to an utterance that does not having a specific goal, for example, an ordinal greeting or an expression of emotion.

Models that generate a response from a user utterance include a rule-based conversation model, a search-based conversation model, and a generation-based conversation model. In an example, the rule-based conversation model uses a preconfigured template. In an example, the search-based conversation model searches a database for an appropriate response. In an example, the generation-based conversation model generates an optimal response using trained encoder and decoder.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, there is provided a response inference method, including obtaining an input, generating a latent variable vector in a latent variable region space partitioned into regions by encoding the input, and generating an output response corresponding to a region, from among the regions, of the latent variable vector by decoding the latent variable vector.

The latent variable vector may be a multidimensional vector that may include latent information variables to generate a response to the input.

The regions may correspond to a plurality of responses.

The latent variable region space may be partitioned by control inputs corresponding to the plurality of responses, and a control input of the control inputs may include information to generate the latent variable vector in the region of the latent variable region space.

The generating of the latent variable vector may include generating a latent variable by encoding the input, and generating the latent variable vector belonging to one of the regions of the latent variable region space corresponding to the latent variable.

The generating of the latent variable vector belonging to the one region may include sampling a plurality of vectors based on a probability distribution representing the latent variable region space, and generating the latent variable vector based on the sampled vectors.

The generating of the latent variable vector belonging to the one of the regions may include selecting one of control inputs corresponding to the regions of the latent variable region space, and generating the latent variable vector belonging to the region corresponding to the selected control input based on a probability distribution.

The generating of the latent variable vector belonging to the one of the regions may include sampling vectors based on a probability distribution representing the latent variable region space, generating an embedded control input by randomizing a control input that may include information to generate the latent variable vector in the region of the latent variable region space, applying the embedded control input to each of the sampling vectors, and generating the latent variable vector using a weighted sum of the sampled vectors to which the embedded control input may be applied.

The control input may include a vector having a dimension that may be same as a dimension of the latent variable vector.

The input may be an utterance of a user not intended to get a specific response in a conversation, and the plurality of responses are different responses to the utterance.

The generating of the latent variable vector may include encoding the input using an encoder, wherein a neural network of the encoder may include an input layer corresponding to the input and an output layer corresponding to a mean and a variance of a probability distribution modeling a latent variable.

The generating of the output response may include decoding the latent variable vector using a decoder, wherein a neural network of the decoder may include an input layer corresponding to the latent variable vector and an output layer corresponding to the output response.

In another general aspect, there is provided a training method for response inference, the training method including obtaining a training input, obtaining a training response from among training responses to the training input, obtaining a control input corresponding to the training response from among control inputs corresponding to the training responses, respectively, generating a latent variable by applying the training input to an encoder, generating a training latent variable vector of a region corresponding to the control input in a latent variable region space corresponding to the latent variable, generating an output response by applying the training latent variable vector to a decoder, and training neural networks of the encoder and the decoder based on the output response and the training response.

The training latent variable vector may be a multidimensional vector that may include information variables latent to generate a response to the training input, and the control input may be information to induce generation of a latent variable vector in a region of the latent variable region space.

The latent variable region space may be partitioned into regions corresponding to the control inputs.

The generating of the training latent variable vector may include sampling vectors based on a probability distribution representing the latent variable region space, generating an embedded control input by randomizing the control input, applying the embedded control input to each of the sampled vectors, and generating a training latent variable vector using a weighted sum of the sampled vectors to which the embedded control input may be applied.

A value of a loss function may include a difference between the training response and the output response may be minimized.

In another general aspect, there is provided a response inference apparatus, including a processor configured to obtain an input, generate a latent variable vector in a latent variable region space partitioned into regions corresponding to a plurality of responses by encoding the input, and generate an output response corresponding to a region from among the regions of the latent variable vector by decoding the latent variable vector.

The latent variable vector may be a multidimensional vector that may include latent information variables to generate a response to the input.

The latent variable region space may be partitioned by control inputs corresponding to the plurality of responses, and a control variable of the control inputs may include information to generate the latent variable vector in the region of the latent variable region space.

The processor may be configured to generate a latent variable by encoding the input, and generate the latent variable vector belonging to one of the regions of the latent variable region space corresponding to the latent variable.

The processor may be configured to sample vectors based on a probability distribution representing the latent variable region space, generate an embedded control input by randomizing a control input that may include information to generate the latent variable vector in a region of the latent variable region space, apply the embedded control input to each of the sampling vectors, and generate the latent variable vector using a weighted sum of the sampled vectors to which the embedded control input may be applied.

In another general aspect, there is provided an electronic device including a sensor configured to receive an input from a user, a memory configured to store a latent variable region space partitioned into regions corresponding to responses, and a processor configured to encode the input to generate a latent variable vector in the latent variable region space, decode the latent variable vector to generate a response corresponding to a region from among the regions, and output the response through a user interface.

The processor may be configured to encode the input to generate a latent variable, partition the latent variable region space into the regions corresponding to control inputs, select a control input, from the control inputs, corresponding to the latent variable, and generate the latent variable vector from the region of the latent variable region space corresponding to the control input.

The control input may be configured to randomly correspond to any one of the regions.

The control input may correspond to any one or any combination of keywords, sentiment of the user, attitude of the user, directive of the user, and guidance of the user.

The processor may include an encoder implementing a first neural network to receive the input at an input layer of the first neural network, and an output layer of the first neural network corresponding to a mean and a variance of a probability distribution modeling the latent variable, and a decoder implementing a second neural network to receive the latent variable vector at an input layer of the second neural network, and an output layer of the second neural network corresponding to the response.

Other features and aspects will be apparent from the following detailed description, the drawings, and the claims.

### BRIEF DESCRIPTION OF THE DRAWINGS

FIG. 1 illustrates an example of a response inference method.
FIGS. 2A and 2B illustrate examples of a response inference method.
FIG. 3 illustrates an example of a response inference method.
FIGS. 4A and 4B illustrate examples of operations performed using an encoder and a decoder.
FIGS. 5A and 5B illustrate examples of generating a latent variable vector through multi-sampling.
FIG. 6 illustrates an example of a training method for response inference.
FIG. 7 illustrates an example of a training method for response inference.
FIG. 8 illustrates an example of a training method for response inference.
FIG. 9 illustrates an example of a configuration of an apparatus.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

When a part is connected to another part, it includes not only a case where the part is directly connected but also a case where the part is connected with another part in between. Also, when a part includes a constituent element, other elements may also be included in the part, instead of the other elements being excluded, unless specifically stated otherwise. Although terms such as "first," "second," "third" "A," "B," (a), and (b) may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

It should be noted that if it is described that one component is "connected", "coupled", or "joined" to another component, a third component may be "connected", "coupled", and "joined" between the first and second components, although the first component may be directly connected, coupled, or joined to the second component. However, if the specification states that a first component is "directly connected" or "directly joined" to a second component, a third component may not be "connected" or "joined" between the first component and the second component. Similar expressions, for example, "between" and "immediately between" and "adjacent to" and "immediately adjacent to," are also to be construed in this manner.

The terminology used herein is for the purpose of describing particular examples only, and is not intended to limit the disclosure or claims. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

The use of the term 'may' herein with respect to an example or embodiment, e.g., as to what an example or embodiment may include or implement, means that at least one example or embodiment exists where such a feature is included or implemented while all examples and embodiments are not limited thereto.

The examples set forth hereinafter relate to a technique of generating a response using a generation-based conversation model. Rule/search-based conversation models have difficulties in recognizing various inputs and are restricted to generate a response within expressions in a database, whereas the generation-based conversation model recognizes various inputs through training. A general generation-based conversation model generates an optimal response based on training and thus, in some example, may have limitations in generating various responses to the same input. However, the generation-based conversation model disclosed herein provides a technology of generating various responses to the same input.

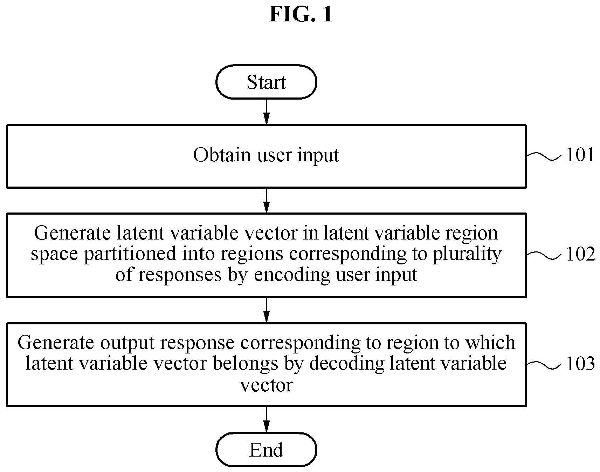

FIG. 1 illustrates an example of a response inference method. The operations in FIG. 1 may be performed in the sequence and manner as shown, although the order of some operations may be changed or some of the operations omitted without departing from the scope of the illustrative examples described. Many of the operations shown in FIG. 1 may be performed in parallel or concurrently. One or more blocks of FIG. 1, and combinations of the blocks, can be implemented by special purpose hardware-based computer that perform the specified functions, or combinations of special purpose hardware and computer instructions.

Referring to FIG. 1, in operation 101, a response inference apparatus obtains an input from a user. In an example, the response inference apparatus is an apparatus that infers a response to an input from a user. In an example, the response inference apparatus is implemented on a hardware module as described below. The user input includes information that enables generation of a response to the user input, such as, for example, a user utterance. For example, the user input includes a multidimensional vector suitable to be processed by the response inference apparatus.

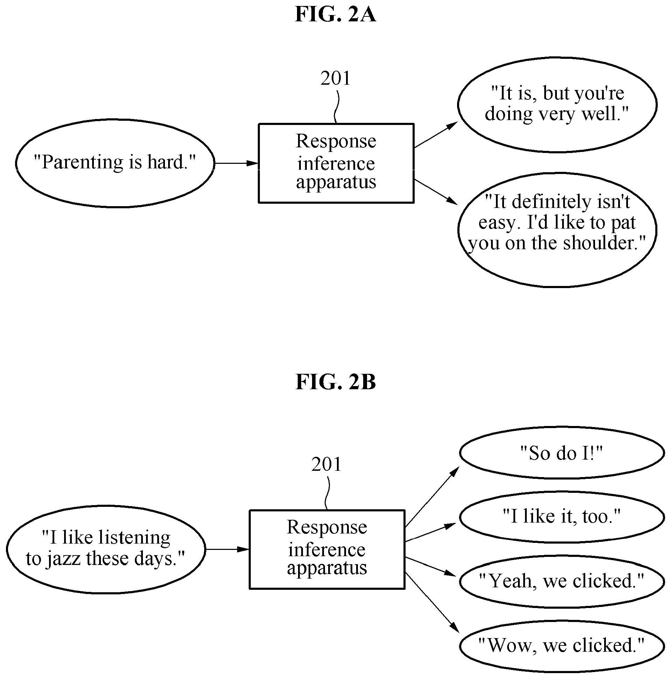

Referring to FIGS. 2A and 2B, a response inference apparatus 201 generates a plurality of responses to the same user input. For example, in response to the input of "Parenting is hard", a first response of "It is, but you're doing very well." is generated at a first point in time, and a second response of "It definitely isn't easy. I'd like to pat you on the shoulder." is generated at a second point in time. Thus, a user feels liveness, rather than boredom, in the automatically generated responses.

Referring to FIG. 1 again, in operation 102, the response inference apparatus generates a latent variable vector in a latent variable region space partitioned into regions corresponding to a plurality of responses by encoding the user input. As described further below, the response inference apparatus generates the latent variable region space corresponding to the user input, partitions the latent variable region space, and generates a different response for each region of the partitioned latent variable region space.

In an example, the response inference apparatus encodes the user input using an encoder. In an example, the encoder is a type of neural network and generates a latent variable by converting a dimension of the user input. For example, the encoder is trained to generate the latent variable from the user input, and the trained encoder generates the latent variable from the user input. In an example, the latent variable is modeled by a probability distribution. For example, the latent variable is represented as the latent variable region space through the probability distribution including a mean and a variance.

In an example, the latent variable region space is a space representing the latent variable that is generated by the encoder and is partitioned into the regions corresponding to the plurality of responses by training the encoder and the decoder. The latent variable region space is partitioned by control inputs corresponding to the plurality of responses. Here, the control inputs are information inducing generation of a latent variable vector in a region of the latent variable region space. The control inputs are vectors of a dimension that is same as that of the generated vector. An operation of partitioning the latent variable region space using the control inputs during a training process will be further described below.

The response inference apparatus generates the latent variable vector from the user input. The latent variable vector is a vector indicating a position within the latent variable domain space and belongs to any one of the regions. The response inference apparatus generates a latent variable vector belonging to one of the regions of the latent variable region space based on the probability distribution.

The latent variable vector is a multidimensional vector containing latent information variables to generate a response corresponding to the user input. As shown in the examples of FIGS. 2A and 2B, the user input is a user utterance that is not intended to get a specific answer in an ordinary conversation, and the response to the user input is a response to the user utterance.

In operation 103, the response inference apparatus generates an output response corresponding to the region to which the latent variable vector belongs by decoding the latent variable vector. Since the latent variable region space is partitioned into regions corresponding to various responses, the response inference apparatus infers various responses from the user input. The response inference apparatus uses the encoder and decoder implemented by trained neural networks, and thus, recognizes various user inputs and generates various responses suitable for the recognized user inputs.

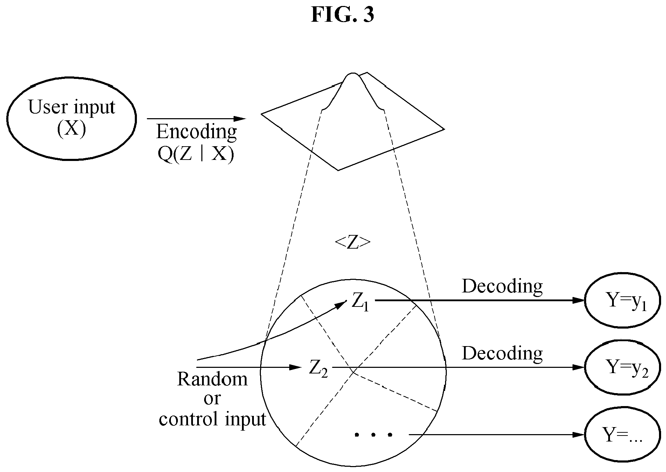

FIG. 3 illustrates an example of a response inference method.

Referring to FIG. 3, a response inference apparatus generates a probability distribution Q(Z|X) modeling a latent variable by encoding a user input (X). A latent variable region space <Z> corresponding to a latent variable Z is represented through the probability distribution.

The latent variable region space <Z> is partitioned by control inputs corresponding to various responses, and the response inference apparatus generates a latent variable vector z from the probability distribution Q(Z|X). In an example, the response inference apparatus generates the latent variable vector z randomly from the probability distribution. In an example, the response inference apparatus generates the latent variable vector z using the control inputs.

In an example, the latent variable vector z may belong to any one of the divided regions within the latent variable region space <Z>. In an example, the response inference apparatus decodes the latent variable vector z to generate an output response P(Y=y_i|Z=z_i). For example, the response inference apparatus generates an output response y₁ corresponding to a region to which a randomly generated latent variable vector z₁ belongs, by decoding the latent variable vector z₁.

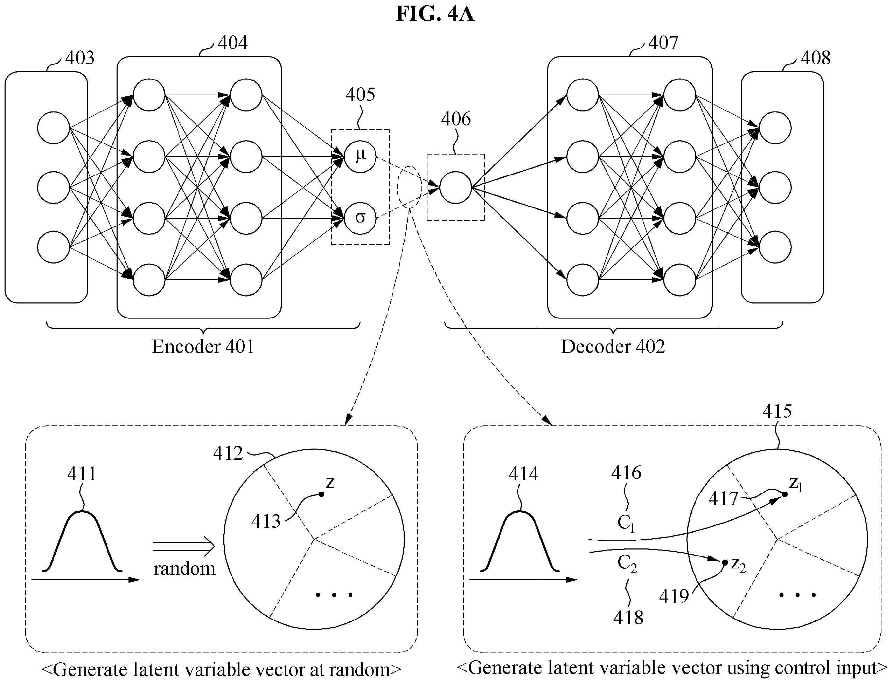

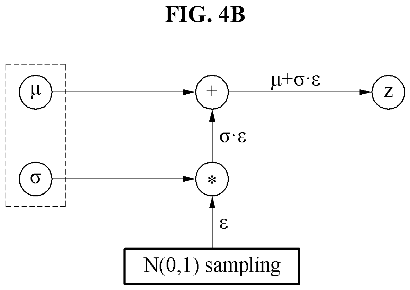

In an example, the response inference apparatus generates the latent variable vector z from the probability distribution Q(Z|X) using the control inputs. The response inference apparatus obtains a control input corresponding to a region in the latent variable region space <Z> or a set response and induces generation of the latent variable vector z corresponding to the region using the obtained control input. For example, the response inference apparatus selects one of the control inputs corresponding to the plurality of responses and induces generation of the latent variable vector z corresponding to the selected control input. The response inference apparatus generates the output response by decoding the generated latent variable vector z. As described above, the response inference apparatus infers a response using an encoder and a decoder. Hereinafter, operations performed using the encoder and the decoder will be described with reference to FIGS. 4A and 4B.

FIGS. 4A and 4B illustrate an example of operations performed using an encoder and a decoder.

Referring to FIG. 4A, a response inference apparatus generates an output response from a user input using an encoder 401 and a decoder 402. The encoder 401 and the decoder 402 are trained in advance to perform encoding and decoding based on a latent variable region space that is partitioned into a plurality of regions. The encoder 401 and the decoder 402 are trained to generate different output responses for the regions of the latent variable region space. The latent variable region space is partitioned into a number of regions by control inputs during a training process.

In an example, a neural network of the encoder 401 includes an input layer 403 corresponding to the user input, a hidden layer 404, and an output layer 405 corresponding to a mean and a variance of a probability distribution modeling a latent variable. A neural network of the decoder 402 includes an input layer 406 corresponding to a latent variable vector, a hidden layer 407, and an output layer 408 corresponding to an output response. The above structures of the neural networks are provided as an example only. Aspects of nodes, connection structures, and parameters in layers can be variously modified to improve the efficiency and performance of training or inference.

In an example, the network of the encoder 401 and the decoder 402 may have an architecture of a deep neural network (DNN) or an architecture of an n-layer neural network. The DNN or the n-layer neural network may correspond to a convolutional neural network (CNN), a recurrent neural network (RNN), a deep belief network, a fully connected network, a bi-directional neural network, restricted Boltzman machines, or may include different or overlapping neural network portions respectively with full, convolutional, recurrent, and/or bi-directional connections. For example, the neural network of the encoder 401 and the decoder 402 may be implemented as the CNN. However, the neural network of the encoder 401 and the decoder 402 is not limited thereto. The CNN, which is the example of the encoder 401 and the decoder 402, may include a sub-sampling layer, a pooling layer, a fully connected layer, etc., in addition to a convolution layer.

The neural networks may be implemented as an architecture having a plurality of layers including input layers 403 and 406, feature maps, and an output layer 405 and 408. In the neural network, a convolution operation between the input, and a filter referred to as a kernel, is performed, and as a result of the convolution operation, the feature maps are output. In an example, the feature maps that are output are input feature maps, and a convolution operation between the output feature maps and the kernel is performed again, and as a result, new feature maps are output. Based on such repeatedly performed convolution operations, ultimately, an output response corresponding to the region to which the latent variable vector 419 belongs is output.

The response inference apparatus generates a probability distribution 411 based on the mean and the variance generated from the user input using the encoder 401. As described above, the response inference apparatus generates a latent variable vector 413 belonging to one of regions of a latent variable region space 412 at random from the probability distribution 411 and generates an output response corresponding to the region to which the latent variable vector 413 belongs using the decoder 402.

The response inference apparatus may induce the generation of a latent variable vector in a desired region using a control input. For example, the response inference apparatus generates a latent variable vector 417 belonging to a first region of a latent variable region space 415 from a probability distribution 414 using a control input 416, and generates an output response corresponding to the region to which the latent variable vector 417 belongs using the decoder 402. The response inference apparatus generates a latent variable vector 419 belonging to a second region among regions of the latent variable region space 415 from the probability distribution 414 using a control input 418 and generates an output response corresponding to the region to which the latent variable vector 419 belongs using the decoder 402.

Referring to FIG. 4B, an example of implementing an operation of generating a latent variable vector from the output layer 405 of the encoder 401 is illustrated. The response inference apparatus transforms a latent variable vector sampled from a normal distribution N with a mean of "0" and a variance of "1", thereby generating a latent variable vector z sampled from a probability distribution Z corresponding to a mean µ and a variance σ of the output layer 405. For example, the response inference apparatus generates the latent variable vector z by sampling ε from the normal distribution N and calculating µ + σ·ε from ε.

In an example, the neural network of the encoder 401 and the decoder 402 is configured to process audio data in voice entry or user utterance to extract information about the voice entry for voice recognition, providing a response, or speech-to-text translation of the voice entry. For example, the neural network performs convolution with respect to one or more input feature maps corresponding to the voice entry to generate an output feature map. The neural network apparatus generates a response to the voice recognition output or a response as a text translation output based on information in the output feature map. That is, the neural network of the encoder 401 and the decoder 402 may indicate the result of the speech recognition or speech-to-text translation, either explicitly or implicitly, as a response. For example, the response to the recognized speech may be explicitly indicated through display in text form on a display of the response inference apparatus or audibly fed back to the user or another user, or implicit indications may be provided through additional operations, or selective non-operations, of the response inference apparatus based on the result of the speech recognition. In comparison with conventional neural network apparatuses, the neural network apparatus of the encoder 401 and the decoder 402 quickly and efficiently processes a convolution operation in a neural network to provide a response to a voice prompt. Thus, making optimal use of available hardware resources for performing convolutions.

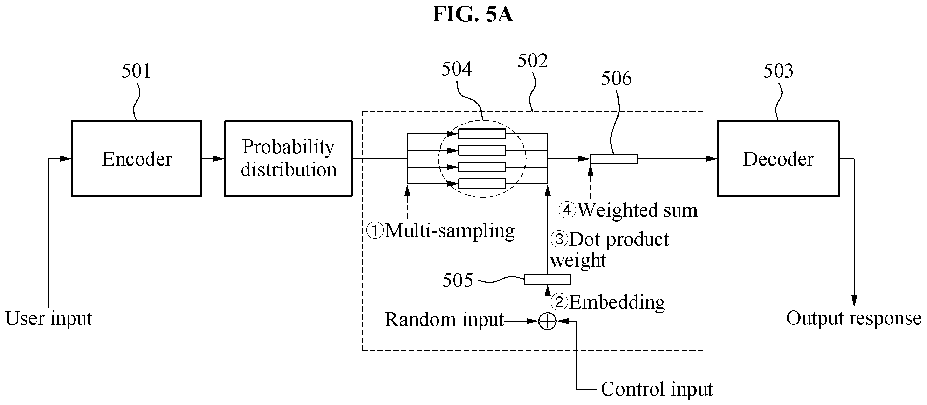

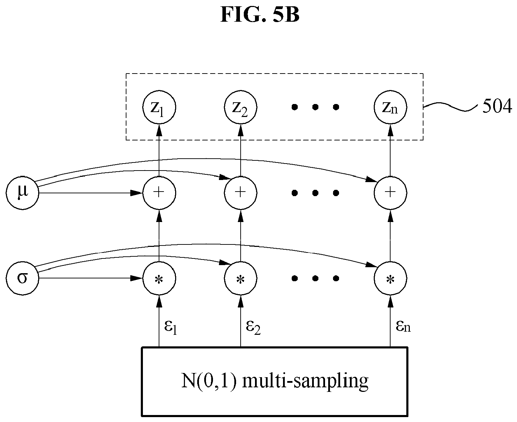

FIGS. 5A and 5B illustrate an example of generating a latent variable vector through multi-sampling.

Referring to FIG. 5A, a response inference apparatus includes a module 502 configured to generate a latent variable vector 506 to be applied to a decoder 503 from a probability distribution, for example, a mean and a variance, generated using an encoder 501. The response inference apparatus samples a plurality of vectors 504 based on the probability distribution generated by the encoder 501. In an example, the response inference apparatus samples the plurality of vectors 504 at random from the probability distribution. In an example, the plurality of vectors 504 includes multidimensional variables.

In an example, the response inference apparatus uses the embedded control input 505 to generate the latent variable vector 506 that randomly selects any one of the plurality of responses. For example, the embedded control input 505 is a vector of a dimension that is the same as those of the sampled vectors 504 and is determined at random.

The response inference apparatus applies the embedded control input 505 to each of the sampled vectors 504. The response inference apparatus calculates a similarity by performing a dot product operation between the control input 505 and each of the sampled vectors 504.

In an example, the response inference apparatus generates the latent variable vector 506 using a similarity-based weighted sum of the sampled vectors to which the embedded control input 505 is applied. For example, a result of the dot product operation between the vectors has a relatively greater value as directions of the vectors become more similar relative to each other. Thus, in an example, the response inference apparatus generates the latent variable vector 506 by summing up results of the dot product operation between the control input 505 and each of the sampled vectors 504. In another example, the response inference apparatus generates the latent variable vector 506 by summing up the sampled vectors 504 using a SoftMax value of results of the dot product operation between the control input 505 and each of the sampled vectors 504 as a weight.

As described above, the latent variable vector 506 is a multidimensional vector representing latent variables to infer a response, and the sampled vectors 504 and the control input 505 are vectors of the same dimension. Thus, in an example, the latent variable vector 506 is also generated in a dimension that is the same as those of the sampled vectors 504 and the control input 505. The response inference apparatus generates an output response from the latent variable vector 506 using the decoder 503.

In this example, as described with reference to FIGS. 2A and 2B, one of various responses to the same user input is selected at random and output.

The response inference apparatus induces a desired response using a control input. The control input is a vector of a dimension that is the same as those of the sampled vectors 504. To induce a particular response among the various responses, the response inference apparatus selects one control input from a plurality of control inputs. As described above, the control input is a vector that biases a latent variable vector to a region among regions into which a latent variable region space is partitioned.

In an example, the response inference apparatus randomizes the control input. For example, the response inference apparatus generates the embedded control input 505 by applying a random input to the control input.

The response inference apparatus generates output responses from a user input using control inputs corresponding to keywords, as shown in Table 1.

**[Table 1]**

| User input | Keyword | Output response |
|---|---|---|
| I have to spend holidays alone. | Movie | Not bad. How about watching VOD movies you wanted to watch? |
| | Book | It would be a relaxed vacation! How about reading books you've bought but never read? |

The response inference apparatus generates output responses from a user input using control inputs corresponding to sentiments, as shown in Table 2.

**[Table 2]**

| User input | Sentiment | Output response |
|---|---|---|
| I like listening to jazz these days. | Positive | So do I. |
| | Negative | I'm interested in classical music more. |

In addition to the above examples, the control inputs may be set based on attitudes and directive or user guidance, and various schemes may be adopted and applied depending on a design intent.

**[Table 3]**

| User input | Attitude | Output response |
|---|---|---|
| I really don't want to work today! | Lazy | Stop doing what you don't want to do, and how about drinking a bottle of cold beer? |
| | Diligent | It must be very hard, but you'd better finish it. Cheer up! |

**[Table 4]**

| User input | Directive | Output response |
|---|---|---|
| Give me some information of investment. | Aggressive investment | Hedge funds are recommended. |
| | Positive investment | Index funds are recommended. |
| | Risk neutral investment | Balanced funds are recommended. |
| | Safety-pursuing investment | Bond funds are recommended. |
| | Safe investment | Savings are recommended. |

The control inputs used in the example of FIG. 5A are the same as control inputs used for a training process, which will be described later.

Referring to FIG. 5B, an example of implementing a multi-sampling operation is illustrated. The response inference apparatus transforms latent variable vectors multi-sampled from a normal distribution N with a mean of "0" and a variance of "1", thereby generating latent variable vectors zᵢ sampled from a probability distribution Z corresponding to a mean µ and a variance σ. For example, the response inference apparatus generates the latent variable vectors zᵢ 504 by multi-sampling εᵢ from the normal distribution N and calculating µ + σ·εᵢ from εᵢ.

In an example, the encoder 501 and the decoder 503 are trained concurrently by implementing an operation of multi-sampling the latent variable vectors between the encoder 501 and the decoder 503 with nodes of neural networks, which will be described later. Through this, examples may be implemented using an end-to-end neural network.

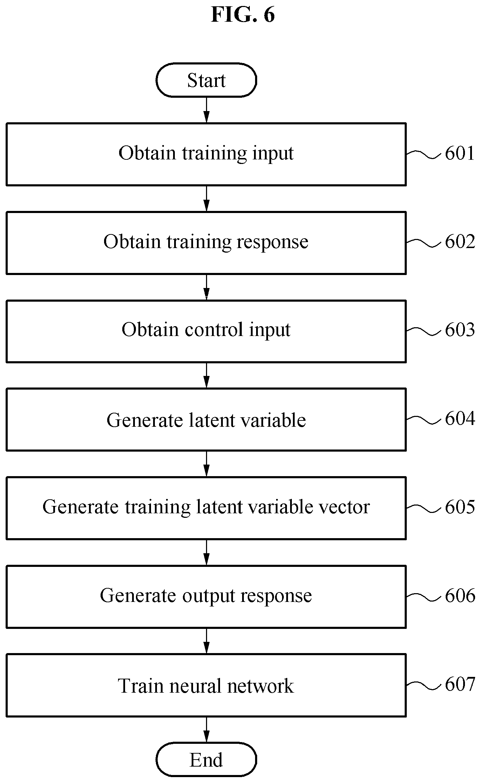

FIG. 6 illustrates an example of a training method for response inference. The operations in FIG. 6 may be performed in the sequence and manner as shown, although the order of some operations may be changed or some of the operations omitted without departing from the scope of the illustrative examples described. Many of the operations shown in FIG. 6 may be performed in parallel or concurrently. One or more blocks of FIG. 6, and combinations of the blocks, can be implemented by special purpose hardware-based computer that perform the specified functions, or combinations of special purpose hardware and computer instructions. In addition to the description of FIG. 6 below, the descriptions of FIGS. 1-5B are also applicable to FIG. 6. Thus, the above description may not be repeated here.

Referring to FIG. 6, in operation 601, a training apparatus for response inference, hereinafter, the training apparatus, obtains a training input. The training apparatus is an apparatus for training an encoder and a decoder to infer a response and may be implemented on a hardware module.

In operation 602, the training apparatus obtains one of a plurality of training responses to the training input. The training response is a response suitable for the training input and corresponds to a ground truth.

In operation 603, the training apparatus obtains a control input corresponding to the obtained training response among control inputs corresponding to the plurality of training responses. For example, training responses to a training input of "I like listening to jazz these days." include "So do I!", "I like it, too.", and "Yeah, we clicked.", and control inputs correspond to the training responses, respectively.

In an example, the control inputs are feature vectors generated by encoding the training responses. Referring to the example of FIG. 2B, a first control input is generated by encoding "So do I!", a second control input is generated by encoding "I like it, too.", a third control input is generated by encoding "Yeah, we clicked.", and a fourth control input is generated by encoding "Wow, we clicked." The first through fourth control inputs are multidimensional vectors indicating different positions in a multidimensional space.

When a latent variable region space is determined based on the user input, the latent variable region space is partitioned into regions using various control inputs corresponding to various responses, and the neural networks are trained to output a response corresponding to each region. Further, the training apparatus generates embedded control inputs by adding a random input to the control inputs and partitions the latent variable region space using the embedded control inputs. Thereby, increasing a proportion of each region in the latent variable region space.

In another example, the control inputs are feature vectors generated by encoding information such as keywords or sentiments as shown in Table 1 and Table 2. For example, referring to Table 1, a first control input is generated by encoding a keyword of "movie", and a second control input is generated by encoding a keyword of "book".

In an example, the training apparatus selects a control input corresponding to a training response to be used for training from among the control inputs.

In operation 604, the training apparatus generates a latent variable by applying the training input to an encoder to be trained. As described above, a probability distribution is one way of representing a latent variable region space corresponding to a latent variable, and the encoder is designed to output a mean and a variance.

In operation 605, the training apparatus generates a training latent variable vector of a region corresponding to the obtained control input in the latent variable region space based on the probability distribution and the obtained control input. As described above, the control input induces generation of a latent variable vector in a region of the latent variable region space, and thus the training apparatus generates the training latent variable vector corresponding to the control input.

In operation 606, the training apparatus generates an output response by applying the training latent variable vector to a decoder to be trained. As described above, the decoder is designed to output a response from the latent variable vector.

In operation 607, the training apparatus trains the neural networks of the encoder and the decoder based on the output response and the training response. The neural networks are trained using various schemes. The training apparatus optimizes the neural networks of the encoder and the decoder and partitions the latent variable region space such that different output responses are generated for regions corresponding to the control inputs. A response inference apparatus generates various output responses using the latent variable region space partitioned by training.

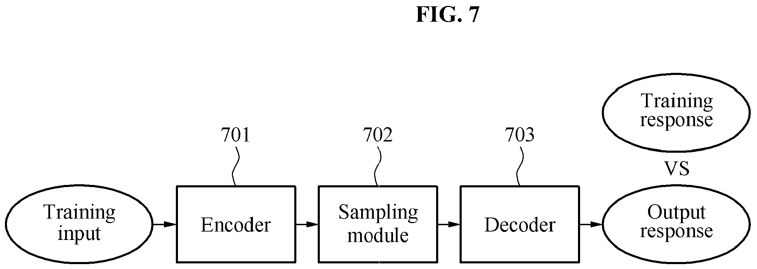

FIG. 7 illustrates an example of a training method for response inference.

Referring to FIG. 7, a training apparatus applies a training input to an encoder 701 and applies a control input to a sampling module 702. The sampling module 702 includes a structure that is the same as that of the module 502 of FIG. 5A and may be implemented to perform multi-sampling as shown in FIG. 5B.

A decoder 703 generates an output response. The training apparatus trains the encoder 701 and the decoder 703 such that a value of a loss function defined as a difference between a training response and the output response may be minimized. For example, the training apparatus trains the encoder 701 and the decoder 703 using a back-propagation training scheme.

In an example, the training apparatus generates an end-to-end type response inference engine by training the encoder 701 and the decoder 703 concurrently.

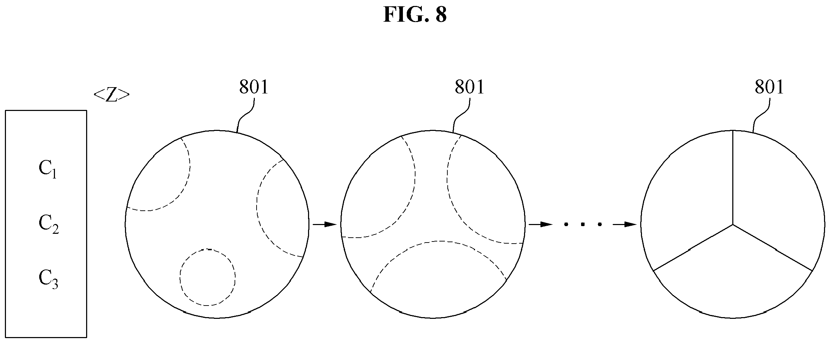

FIG. 8 illustrates an example of a training method for response inference.

Referring to FIG. 8, a latent variable region space 801 is partitioned by control inputs c₁, c₂, and c₃ corresponding to various responses. A training apparatus trains an encoder and a decoder based on the control inputs c₁, c₂, and c₃, a plurality of training inputs, training responses, and output responses, and the latent variable region space 801 is partitioned into regions respectively corresponding to the control inputs c₁, c₂, and c₃ by training.

In an example, the regions of the latent variable region space 801 differ from each other to respectively correspond to the control inputs. A region of the latent variable region space 801 indicated by a control input may not be known at a time when the control input is input.

Although not shown in the drawings, the latent variable region space 801 may be softly partitioned. For example, regions of the latent variable region space 801 may overlap each other, or there may be an empty region in the latent variable region space 801. In this example, a latent variable vector may belong to an overlapping region of at least two regions or the empty region.

Although not shown in the drawings, a response inference engine configured to generate a response comprehensively considering results of training with respect to different user inputs may be generated.

**[Table 5]**

| User input | Control input | Output response |
|---|---|---|
| A | Feature vector generated based on a1 | a1 |
| | Feature vector generated based on a2 | a2 |
| | Feature vector generated based on a3 | a3 |
| A' | Feature vector generated based on b1 | b1 |
| | Feature vector generated based on a2' | a2' |

For example, referring to Table 5, output responses a1, a2, and a3 are used for training with respect to a user input A. Further, output responses b1 and a2' are used for training with respect to a user input A'.

The user input A and the user input A' are similar to each other. In this example, a first latent variable region space generated by the user input A and a second latent variable region space generated by the user input A' are similar to each other.

In addition, the output response a2 and the output response a2' are similar to each other. In this example, a first region selected by the feature vector of the output response a2 and a second region selected by the feature vector of the output response a2' are similar to each other.

The first region of the first latent variable region space and the second region of the second latent variable region space have similar distributions, and the other output responses a1, a3, and b1 are distributed in regions different from the first region and the second region.

As a result, the response inference engine trained as shown in Table 3 generates b1 as well as a1, a2, and a3 in response to the user input A during an inference process. Further, the response inference engine also generates a1 and a3 as well as b1 and a2' in response to the user input A'.

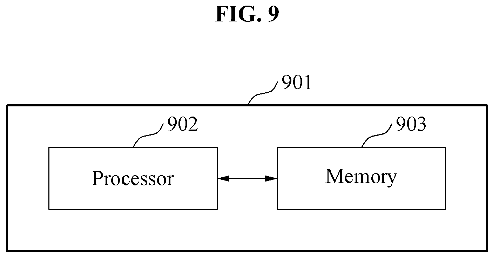

FIG. 9 illustrates an example of a configuration of an response inference apparatus.

Referring to FIG. 9, a response inference apparatus 901 includes a processor 902 and a memory 903. The response inference apparatus 901 is the response inference apparatus or the training apparatus described above. The processor 902 includes at least one of the apparatuses described above with reference to FIGS. 1 through 8 or performs at least one of the methods described above with reference to FIGS. 1 through 8. Further details of the processor 902 are provided below. The memory 903 stores information related to the response inference method or the training method described above or stores a program to implement the response inference method or the training method described above. The memory 903 is a volatile memory or a non-volatile memory. Further details of the memory 903 are provided below.

The processor 902 executes the program and controls the response inference apparatus 901. Program codes to be executed by the processor 902 are stored in the memory 903. The apparatus 901 is connected to an external device, for example, a personal computer or a network, through an input and output device (not shown) and exchange data with the external device.

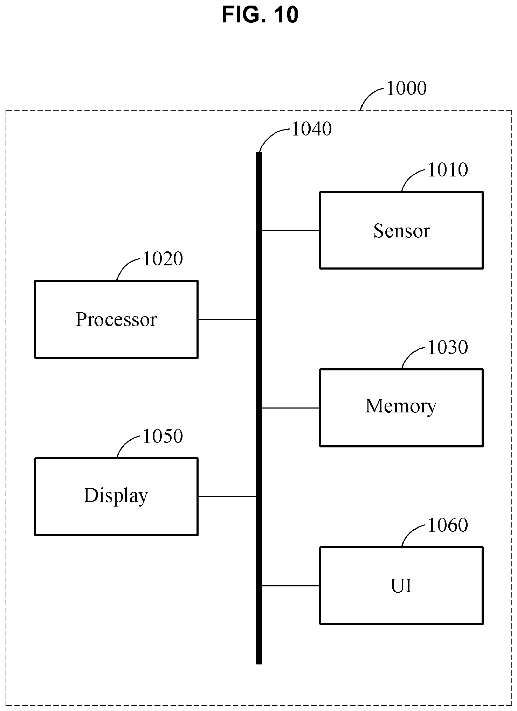

FIG. 10 is a diagram illustrating an example of an electronic system or device 1000 configured to implement a response inference apparatus. Referring to FIG. 10, the electronic system or device 1000 includes a sensor 1010, a processor 1020, a local memory 1025 (not shown), a memory 1030, a display 1050, and a user interface (UI) 1060. The sensor 1010, the processor 1020, the memory 1030, the display 1050, and the UI 1060 communicate with each other via a bus 1040.

The electronic system or device 1000 may correspond to the response inference apparatus of any one of FIGS. 2A, 2B, or encoder 401 or decoder 402 of FIG. 4A, and may implement any one or more or all of the above processes or methods. As a non-limiting example, the processor 1020 may correspond to processor 901 of FIG. 9, and/or the memory 1030 may correspond to the memory 903 of FIG. 9. The local memory 1025 may correspond to any of the above described temporary or local buffers/memories, while the memory 1030 may store a database from which kernel elements, feature maps, weight elements, voice elements, latent variable region space, output responses, and/or training data may be loaded from and into the local memory 1025. In an example, the local buffers/memories may be memories of the processor 1020 or buffers/memories directly connected to the processor 1020, e.g., configured for rapidly transferring data to/from the processor 1020 and the local memory 1025, noting that alternatives are also available. The local memory 1025 may further be allocated to temporarily store convolutional output results of a particular layer of the neural network, or all layers of the neural network, the ultimate output results of which may be stored in the memory 1030 and/or respectively used for inputs to a next layer. In an example, except for purposes of an input to a next layer, the convolutional results of each layer may discarded and only final layer(s) output results of the neural network stored to the memory 1030 or used for another process, such as in a corresponding display operation of a mobile phone as the electronic system or device 1000. The processor 1020 may represent one or more processors that are configured as any one or any combination of the above neural network processing apparatuses or recognition apparatuses, as non-limiting examples. Further details of the processor 1020 are provided below.

The processor 1020 may be configured to perform one or more or all processes described with reference to FIGS. 1-8. For example, to provide a response to a voice input, the processor 1020 may recognize the input data and prepare a output response based on the neural network processing operations described above with respect to FIGS. 1-8, which may also be considered acceleration processes that efficiently processes a convolution operation in a neural network. The result of any of the recognition, or response operations may be output through the display 1050 or the UI 1060. In addition, user adjustments or selective operations of the neural network processing operations discussed herein may be provided by UI 1060, which may include a touch screen or other input/output device/system, such as a microphone or a speaker. As noted above and described below, the processor 1020 may be a graphics processor unit (GPU), reconfigurable processor, or have any other type of multi- or single-processor configuration.

The sensor 1010 includes, for example, a microphone and/or an image sensor or camera to sense video data and audio data to recognize audio input, for example. In an example, the sensor 1010 senses a voice using a well-known scheme, for example, a scheme of converting an voice input to an electronic signal. An output of the sensor 1010 is transferred to the processor 1020 or the memory 1030, and output of the sensor 1010 may also be transferred directly to, or operate as, an input layer of a neural network discussed herein.

In addition to operations of one or more of the neural network processing apparatuses and/or operations described in FIGS. 1-8 as noted above, the memory 1030 may further store instructions which, when executed by processor 1020, cause the processor 1020 to perform additional operations, functions, and controls of the electronic system or device 1000, such as a user interface of the electronic system. The electronic system or device 1000 may be connected to an external device, for example, a personal computer (PC) or a network, via an input/output device of the electronic system, to exchange data with the external device. The electronic system or device 1000 may be various electronic devices, as only non-limiting examples, a mobile device, for example, a mobile telephone, a smartphone, a wearable smart device (such as, a ring, a watch, a pair of glasses, glasses-type device, a bracelet, an ankle bracket, a belt, a necklace, an earring, a headband, a helmet, a device embedded in the cloths, or an eye glass display (EGD)), a computing device, for example, a server, a laptop, a notebook, a subnotebook, a netbook, an ultra-mobile PC (UMPC), a tablet personal computer (tablet), a phablet, a mobile internet device (MID), a personal digital assistant (PDA), an enterprise digital assistant (EDA), an ultra mobile personal computer (UMPC), a portable lab-top PC, electronic product, for example, a robot, a digital camera, a digital video camera, a portable game console, an MP3 player, a portable/personal multimedia player (PMP), a handheld e-book, a global positioning system (GPS) navigation, a personal navigation device, portable navigation device (PND), a handheld game console, an e-book, a television (TV), a high definition television (HDTV), a smart TV, a smart appliance, a smart home device, or a security device for gate control, various Internet of Things (IoT) devices, or any other device capable of wireless communication or network communication consistent with that disclosed herein.

The response inference apparatus, the training apparatus, response inference apparatus 201, module 502, encoder 401, decoder 402, encoder 501, module 502, decoder 503, encoder 701, sampling module 702, decoder 703, and other apparatuses, units, modules, devices, and other components described herein with respect to FIGS. 1-10 are implemented by hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-9 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In an example, the instructions or software includes at least one of an applet, a dynamic link library (DLL), middleware, firmware, a device driver, an application program storing the method of preventing the collision. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, card type memory such as multimedia card, secure digital (SD) card, or extreme digital (XD) card, magnetic tapes, floppy disks, magneto-optical data storage devices, optical data storage devices, hard disks, solid-state disks, and any other device that is configured to store the instructions or software and any associated data, data files, and data structures in a non-transitory manner and providing the instructions or software and any associated data, data files, and data structures to a processor or computer so that the processor or computer can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

Embodiments of the present disclosure are further defined in the following clauses: .
Clause 1: A response inference method, comprising:
   obtaining an input;
   generating a latent variable vector in a latent variable region space partitioned into regions by encoding the input; and
   generating an output response corresponding to a region, from among the regions, of the latent variable vector by decoding the latent variable vector.
Clause 2: The response inference method of clause 1, wherein the latent variable vector is a multidimensional vector comprising latent information variables to generate a response to the input.
Clause 3: The response inference method of clause 1 or 2, wherein the regions correspond to a plurality of responses.
Clause 4: The response inference method of clause 3, wherein the latent variable region space is partitioned by control inputs corresponding to the plurality of responses, and a control input of the control inputs comprises information to generate the latent variable vector in the region of the latent variable region space.
Clause 5: The response inference method of clause 1, wherein the generating of the latent variable vector comprises:
   generating a latent variable by encoding the input; and
   generating the latent variable vector belonging to one of the regions of the latent variable region space corresponding to the latent variable.
Clause 6: The response inference method of clause 4, wherein the generating of the latent variable vector belonging to the one region comprises:
   sampling a plurality of vectors based on a probability distribution representing the latent variable region space; and
   generating the latent variable vector based on the sampled vectors.
Clause 7: The response inference method of clause 4, wherein the generating of the latent variable vector belonging to the one of the regions comprise:
   selecting one of control inputs corresponding to the regions of the latent variable region space; and
   generating the latent variable vector belonging to the region corresponding to the selected control input based on a probability distribution.
Clause 8: The response inference method of clause 4, wherein the generating of the latent variable vector belonging to the one of the regions comprise:
   sampling vectors based on a probability distribution representing the latent variable region space;
   generating an embedded control input by randomizing a control input comprising information to generate the latent variable vector in the region of the latent variable region space;
   applying the embedded control input to each of the sampling vectors; and
   generating the latent variable vector using a weighted sum of the sampled vectors to which the embedded control input is applied.
Clause 9: The response inference method of clause 8, wherein the control input comprises a vector having a dimension that is same as a dimension of the latent variable vector.
Clause 10: The response inference method of clause 3, wherein the input is an utterance of a user not intended to get a specific response in a conversation, and
   the plurality of responses are different responses to the utterance.
Clause 11: The response inference method of clause 1, wherein the generating of the latent variable vector comprises encoding the input using an encoder,
   wherein a neural network of the encoder comprises an input layer corresponding to the input and an output layer corresponding to a mean and a variance of a probability distribution modeling a latent variable.
Clause 12: The response inference method of clause 1, wherein the generating of the output response comprises decoding the latent variable vector using a decoder,
   wherein a neural network of the decoder comprises an input layer corresponding to the latent variable vector and an output layer corresponding to the output response.
Clause 13: A non-transitory computer-readable storage medium storing instructions that, when executed by a processor, cause the processor to perform the response inference method of clause 1.
Clause 14: A training method for response inference, the training method comprising:
   obtaining a training input;
   obtaining a training response from among training responses to the training input;
   obtaining a control input corresponding to the training response from among control inputs corresponding to the training responses, respectively;
   generating a latent variable by applying the training input to an encoder;
   generating a training latent variable vector of a region corresponding to the control input in a latent variable region space corresponding to the latent variable;
   generating an output response by applying the training latent variable vector to a decoder; and training neural networks of the encoder and the decoder based on the output response and the training response.
Clause 15: The training method of clause 14, wherein the training latent variable vector is a multidimensional vector comprising information variables latent to generate a response to the training input, and
   the control input is information to induce generation of a latent variable vector in a region of the latent variable region space.
Clause 16: The training method of clause 14, wherein the latent variable region space is partitioned into regions corresponding to the control inputs.
Clause 17: The training method of clause 14, wherein the generating of the training latent variable vector comprises:
   sampling vectors based on a probability distribution representing the latent variable region space;
   generating an embedded control input by randomizing the control input;
   applying the embedded control input to each of the sampled vectors; and
   generating a training latent variable vector using a weighted sum of the sampled vectors to which the embedded control input is applied.
Clause 18: The training method of clause 14, wherein a value of a loss function comprising a difference between the training response and the output response is minimized.
Clause 19: A non-transitory computer-readable storage medium storing instructions that, when executed by a processor, cause the processor to perform the training method of clause 14.
Clause 20: A response inference apparatus, comprising:
   a processor configured to:
   obtain an input,
   generate a latent variable vector in a latent variable region space partitioned into regions corresponding to a plurality of responses by encoding the input, and
   generate an output response corresponding to a region from among the regions of the latent variable vector by decoding the latent variable vector.
Clause 21: The response inference apparatus of clause 20, wherein the latent variable vector is a multidimensional vector comprising latent information variables to generate a response to the input.
Clause 22: The response inference apparatus of clause 20, wherein the latent variable region space is partitioned by control inputs corresponding to the plurality of responses, and a control variable of the control inputs comprises information to generate the latent variable vector in the region of the latent variable region space.
Clause 23: The response inference apparatus of clause 20, wherein the processor is configured to:
   generate a latent variable by encoding the input, and
   generate the latent variable vector belonging to one of the regions of the latent variable region space corresponding to the latent variable.
Clause 24: The response inference apparatus of clause 23, wherein the processor is configured to:
   sample vectors based on a probability distribution representing the latent variable region space,
   generate an embedded control input by randomizing a control input comprising information to generate the latent variable vector in a region of the latent variable region space,
   apply the embedded control input to each of the sampling vectors, and
   generate the latent variable vector using a weighted sum of the sampled vectors to which the embedded control input is applied.
Clause 25: An electronic device comprising:
   a sensor configured to receive an input from a user;
   a memory configured to store a latent variable region space partitioned into regions corresponding to responses; and
   a processor configured to:
      encode the input to generate a latent variable vector in the latent variable region space,
      decode the latent variable vector to generate a response corresponding to a region from among the regions, and
      output the response through a user interface.
Clause 26: The response inference apparatus of clause 25, wherein the processor is further configured to:
   encode the input to generate a latent variable;
   partition the latent variable region space into the regions corresponding to control inputs;
   select a control input, from the control inputs, corresponding to the latent variable; and
   generate the latent variable vector from the region of the latent variable region space corresponding to the control input.
Clause 27: The response inference apparatus of clause 26, wherein the control input is configured to randomly correspond to any one of the regions.
Clause 28: The response inference apparatus of clause 26, wherein the control input corresponds to any one or any combination of keywords, sentiment of the user, attitude of the user, directive of the user, and guidance of the user.
Clause 29: The response inference apparatus of clause 26, wherein the processor comprises:
   an encoder implementing a first neural network to receive the input at an input layer of the first neural network, and an output layer of the first neural network corresponding to a mean and a variance of a probability distribution modeling the latent variable; and
   a decoder implementing a second neural network to receive the latent variable vector at an input layer of the second neural network, and an output layer of the second neural network corresponding to the response.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims are to be construed as being included in the disclosure.

## Claims

1. A response inference method, comprising:
obtaining an input;
generating a latent variable vector in a latent variable region space partitioned into regions by encoding the input; and
generating an output response corresponding to a region, from among the regions, of the latent variable vector by decoding the latent variable vector.

2. The response inference method of claim 1, wherein the latent variable vector is a multidimensional vector comprising latent information variables to generate a response to the input, and/or
wherein the generating of the latent variable vector comprises:
generating a latent variable by encoding the input; and
generating the latent variable vector belonging to one of the regions of the latent variable region space corresponding to the latent variable.

3. The response inference method of claim 1 or 2, wherein the regions correspond to a plurality of responses, and
wherein preferably the input is an utterance of a user not intended to get a specific response in a conversation, and the plurality of responses are different responses to the utterance.

4. The response inference method of claim 3, wherein the latent variable region space is partitioned by control inputs corresponding to the plurality of responses, and a control input of the control inputs comprises information to generate the latent variable vector in the region of the latent variable region space.

5. The response inference method of claim 4, wherein the generating of the latent variable vector belonging to the one region comprises:
sampling a plurality of vectors based on a probability distribution representing the latent variable region space; and
generating the latent variable vector based on the sampled vectors.
and/or comprises:
selecting one of control inputs corresponding to the regions of the latent variable region space; and
generating the latent variable vector belonging to the region corresponding to the selected control input based on a probability distribution.

6. The response inference method of claim 4 or 5, wherein the generating of the latent variable vector belonging to the one of the regions comprise:
sampling vectors based on a probability distribution representing the latent variable region space;
generating an embedded control input by randomizing a control input comprising information to generate the latent variable vector in the region of the latent variable region space;
applying the embedded control input to each of the sampling vectors; and
generating the latent variable vector using a weighted sum of the sampled vectors to which the embedded control input is applied
wherein the control input preferably comprises a vector having a dimension that is same as a dimension of the latent variable vector.

7. The response inference method of any of the previous claims, wherein the generating of the latent variable vector comprises:
encoding the input using an encoder, wherein a neural network of the encoder comprises an input layer corresponding to the input and an output layer corresponding to a mean and a variance of a probability distribution modeling a latent variable, and/or
decoding the latent variable vector using a decoder, wherein a neural network of the decoder comprises an input layer corresponding to the latent variable vector and an output layer corresponding to the output response.

8. A training method for response inference, the training method comprising:
obtaining a training input;
obtaining a training response from among training responses to the training input;
obtaining a control input corresponding to the training response from among control inputs corresponding to the training responses, respectively;
generating a latent variable by applying the training input to an encoder;
generating a training latent variable vector of a region corresponding to the control input in a latent variable region space corresponding to the latent variable;
generating an output response by applying the training latent variable vector to a decoder; and
training neural networks of the encoder and the decoder based on the output response and the training response.

9. The training method of claim 8, wherein the training latent variable vector is a multidimensional vector comprising information variables latent to generate a response to the training input, and the control input is information to induce generation of a latent variable vector in a region of the latent variable region space, and/or
wherein the latent variable region space is partitioned into regions corresponding to the control inputs, and/or
wherein a value of a loss function comprising a difference between the training response and the output response is minimized, and/or
wherein the generating of the training latent variable vector comprises:
sampling vectors based on a probability distribution representing the latent variable region space;
generating an embedded control input by randomizing the control input;
applying the embedded control input to each of the sampled vectors; and
generating a training latent variable vector using a weighted sum of the sampled vectors to which the embedded control input is applied.

10. A non-transitory computer-readable storage medium storing instructions that, when executed by a processor, cause the processor to perform the response inference method of any of the claims 1 - 7, and/or the training method of any of the claims 8-9.

11. A response inference apparatus, comprising:
a processor configured to:
obtain an input,
generate a latent variable vector in a latent variable region space partitioned into regions corresponding to a plurality of responses by encoding the input, and
generate an output response corresponding to a region from among the regions of the latent variable vector by decoding the latent variable vector.

12. The response inference apparatus of claim 11, wherein the latent variable vector is a multidimensional vector comprising latent information variables to generate a response to the input, and/or
wherein the latent variable region space is partitioned by control inputs corresponding to the plurality of responses, and a control variable of the control inputs comprises information to generate the latent variable vector in the region of the latent variable region space.

13. The response inference apparatus of claim 11 or 12, wherein the processor is configured to:
generate a latent variable by encoding the input,
generate the latent variable vector belonging to one of the regions of the latent variable region space corresponding to the latent variable, and
wherein the processor is preferably further configured to:
sample vectors based on a probability distribution representing the latent variable region space,
generate an embedded control input by randomizing a control input comprising information to generate the latent variable vector in a region of the latent variable region space,
apply the embedded control input to each of the sampling vectors, and
generate the latent variable vector using a weighted sum of the sampled vectors to which the embedded control input is applied.

14. An electronic device, for instance the response inference apparatus as claimed in any of claims 11-13, the electronic device comprising:
a sensor configured to receive an input from a user;
a memory configured to store a latent variable region space partitioned into regions corresponding to responses; and
a processor configured to:
encode the input to generate a latent variable vector in the latent variable region space,
decode the latent variable vector to generate a response corresponding to a region from among the regions, and
output the response through a user interface.

15. The response inference device of claim 14, wherein the processor is further configured to:
encode the input to generate a latent variable;
partition the latent variable region space into the regions corresponding to control inputs;
select a control input, from the control inputs, corresponding to the latent variable; and
generate the latent variable vector from the region of the latent variable region space corresponding to the control input,
wherein the control input is preferably configured to:
randomly correspond to any one of the regions, and/or
any one or any combination of keywords, sentiment of the user, attitude of the user, directive of the user, and guidance of the user, and/or
wherein the processor preferably comprises:
an encoder implementing a first neural network to receive the input at an input layer of the first neural network, and an output layer of the first neural network corresponding to a mean and a variance of a probability distribution modeling the latent variable; and
a decoder implementing a second neural network to receive the latent variable vector at an input layer of the second neural network, and an output layer of the second neural network corresponding to the response.
